# EUROPÄISCHE PATENTSCHRIFT

(11) **EP 2 865 554 B1**
(45) Veröffentlichungstag und Bekanntmachung des Hinweises auf die Patenterteilung: **05.12.2018**
(21) Anmeldenummer: 14003446.3
(22) Anmeldetag: 07.10.2014
(51) Int. Cl.: B60K 15/04, B60K 15/03, G01F 23/04, F01M 11/04

(54) **Fluidbehälter**
Fluid tank
Réservoirs de liquides

(30) Priorität: 28.10.2013 DE 102013017747
(43) Veröffentlichungstag der Anmeldung: 29.04.2015
(73) Patentinhaber: DEUTZ Aktiengesellschaft, 51149 Köln (DE)
(72) Erfinder: Poloczek, Adrian, 50933 Köln (DE); Kaletsch, Kai, 40597 Düsseldorf (DE); Mirgeler, Martin, 58859 Niederkassel (DE)

(56) Entgegenhaltungen:
- CN-A- 101 749 077
- DE-A1-102011 117 999
- GB-A- 2 054 539
- US-A- 5 485 681
- US-A1- 2010 187 232

## Beschreibung

Fluidbehälter mit Einfüllverschluss sind beispielsweise aus Nutzfahrzeugen, Baumaschinen, Landwirtschaftsmaschinen und anderen motorbetriebenen Geräten wie beispielsweise aus Kraftfahrzeugen bekannt, wo Betriebsmittel wie Kraftstoff und Schmieröl über sogenannte Einfüllstutzen manuell befüllt und nachgefüllt werden können.
Ein derartiger Einfüllstutzen ist beispielsweise aus der FR 2542037 bekannt.
Weiter wird in der US 4,331,185 ein Einfüllstutzen der eingangs genannten Art offenbart.
In der US 2,953,939 wird ebenfalls ein Einfüllstutzen gezeigt.

Die DE 10 2007 026 369 A1 stellt einen derartigen Einfüllstutzen dar.

GB 2 054 539 A offenbart einen Kraftstofftank mit einem Einfüllverschluss, der die Merkmale des Oberbegriffs von Anspruch 1 beinhaltet.

Diese marktüblichen Vorrichtungen zum Einfüllen von Betriebsmitteln (Einfüllstutzen) sind aus Wartungsgründen gut zugänglich gestaltet und daher für jede Person frei zugänglich. Daran ist nachteilig, dass die Vorrichtungen nicht abschließbar sind, die Peilstäbe sind nicht für stark gekrümmte Einfüllrohre geeignet.
Es ist die Aufgabe der vorliegenden Erfindung, die obigen Nachteile zu vermeiden.

Die Aufgabe wird durch einen Fluidbehälter gemäß Anspruch 1 gelöst.

Vorteilhaft ist, dass die drehbare Lagerung des flachen Peilstabs das Blockieren und Verbiegen auch bei stark gekrümmten Einfüllrohren verhindert, da sich beim Einführen in ein stark gekrümmtes Einfüllrohr der Peilstab "aufrichten" und somit das Weiterdrehen des Deckels (3) verhindern würde. Dadurch entstehen Spannungen an der Verbindung zwischen Peilstab und Deckel erst gar nicht.
Weitere vorteilhafte Ausgestaltungen sind in den Unteransprüchen enthalten.

Weitere Merkmale und Vorteile der vorliegenden Erfindung, gemäß der Ansprüche, ergeben sich aus der nachfolgenden Beschreibung von Ausführungsbeispielen unter Bezugnahme auf die beigefügten Figuren. Es zeigen:
- Figur 1: einen abschließbaren Einfüllverschluss mit drehbarem Peilstab
- Figur 2: den Fluidbehälter mit abschließbaren Einfüllverschluss aus Figur 1
- Figur 3: den Deckel mit Schließzylinder und Peilstab aus Figur 1
- Figur 4: den Deckel aus Figur 1 mit zwei Peilstabkorbbajonettnasen
- Figur 5: den abschließbaren Deckel aus Figur 1 im unverschlossenen Zustand

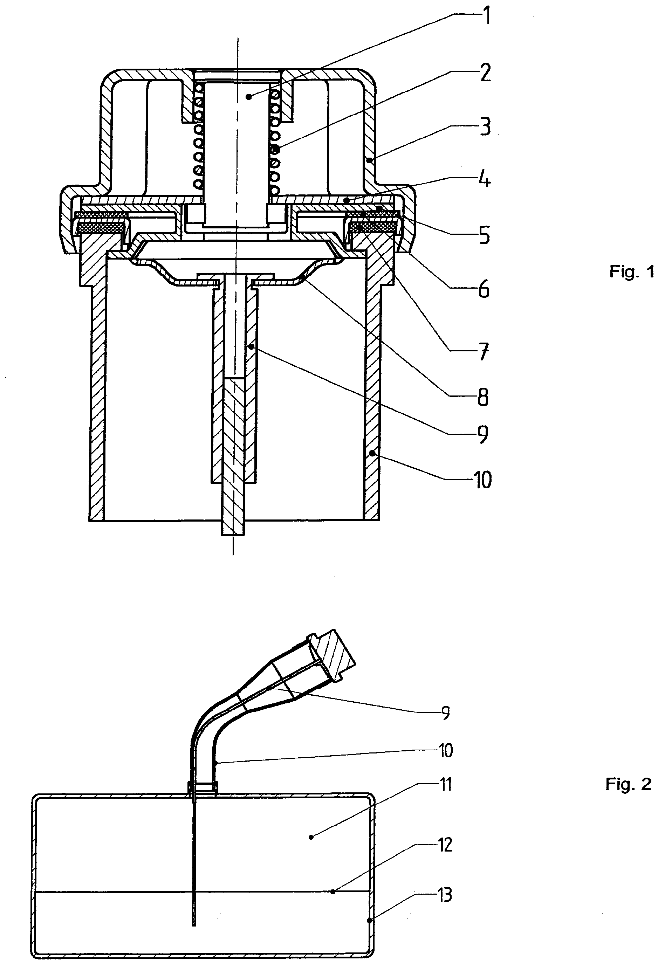

Figur 1 zeigt einen abschließbaren Einfüllverschluss mit drehbar gelagertem und flexiblem Peilstab 9 zur Füllstandsmessung. Der Deckel 3 umfasst einen Schließzylinder 1, der von einer Spannfeder 2 konzentrisch umgeben ist. Stützring 4 bildet die der Deckeloberseite entgegengesetzte Lagerung des Schließzylinders 1, wobei der Stützring 4 auch als Anschlag für die Spannfeder 2 dient. An den Stützring 4 parallel und zur Deckeloberseite entgegengesetzt angebracht befindet sich das Verschlussblech 5. Planparallel zum und am Verschlussblech 5 angeordnet befindet sich das Ausgleichselement 6. Zwischen Deckel 3 und Einfüllrohr 10 befindet sich eine kreisrunde Dichtung 7. Im Wesentlichen unterhalb des Schließzylinders, der Deckeloberseite entgegengesetzt, befindet sich ein Peilstabkorb 8, der einen drehbar gelagerten Peilstab 9 aufweist. Der Deckel 3 mit dem drehbaren und flexiblen Peilstab 9 zur Füllstandsmessung wird als abschließbarer Einfüllverschluss auf das Einfüllrohr 10 drehbar aufgesetzt und mittels Schließzylinder 1 gegen unberechtigtes Öffnen und Zugang zum Fluidraum 11 verschlossen. Mittels des Peilstabs 9 kann der Soll- bzw. Ist-Stand 12 des Fluidbehälters 13 ermittelt werden.

Figur 2 zeigt den abschließbaren Einfüllverschluss mit drehbar gelagertem und flexiblem Peilstab 9 zur Füllstandsmessung aus Figur 1 auf dem Fluidbehälter 13. Der Deckel 3 umfasst einen Schließzylinder 1, der von einer Spannfeder 2 konzentrisch umgeben ist. Stützring 4 bildet die der Deckeloberseite entgegengesetzte Lagerung des Schließzylinders 1, wobei der Stützring 4 auch als Anschlag für die Spannfeder 2 dient. An den Stützring 4 parallel und zur Deckeloberseite entgegengesetzt angebracht befindet sich das Verschlussblech 5. Planparallel zum und am Verschlussblech 5 angeordnet befindet sich das Ausgleichselement 6. Zwischen Deckel 3 und Einfüllrohr 10 befindet sich eine kreisrunde Dichtung 7. Im Wesentlichen unterhalb des Schließzylinders, der Deckeloberseite entgegengesetzt, befindet sich ein Peilstabkorb 8, der einen drehbar gelagerten Peilstab 9 aufweist. Der Deckel 3 mit dem drehbaren und flexiblen Peilstab 9 zur Füllstandsmessung wird als abschließbarer Einfüllverschluss auf das Einfüllrohr 10 drehbar aufgesetzt und mittels Schließzylinder 1 gegen unberechtigtes Öffnen und Zugang zum Fluidraum 11 verschlossen. Mittels des Peilstabs 9 kann der Soll- bzw. Ist-Stand 12 des Fluidbehälters 13 ermittelt werden.

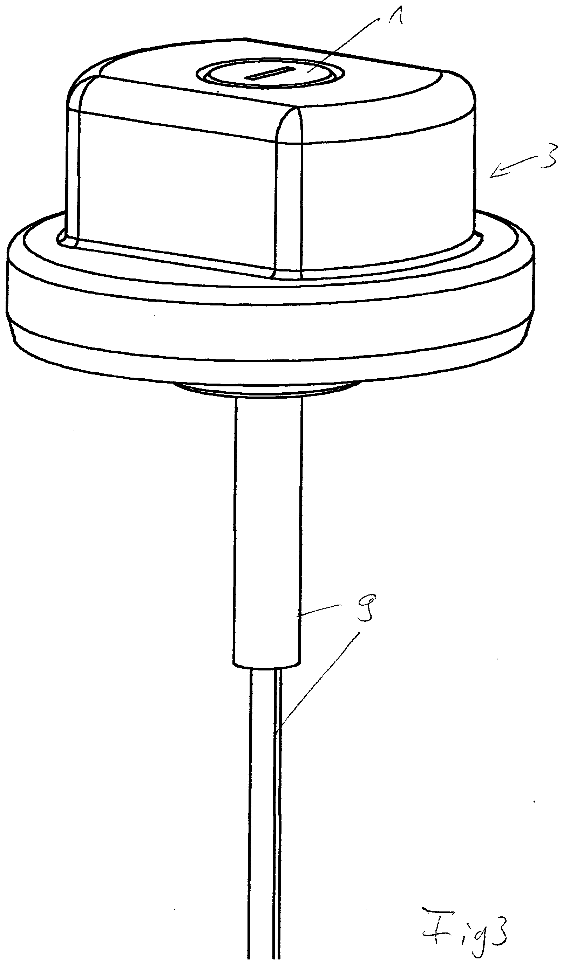

Figur 3 zeigt den Deckel 3 mit dem am oberen Ende des Deckels 3 angeordneten Schließzylinder 1 und dem am unteren Ende des Deckels 3 angeordneten Peilstab 9.

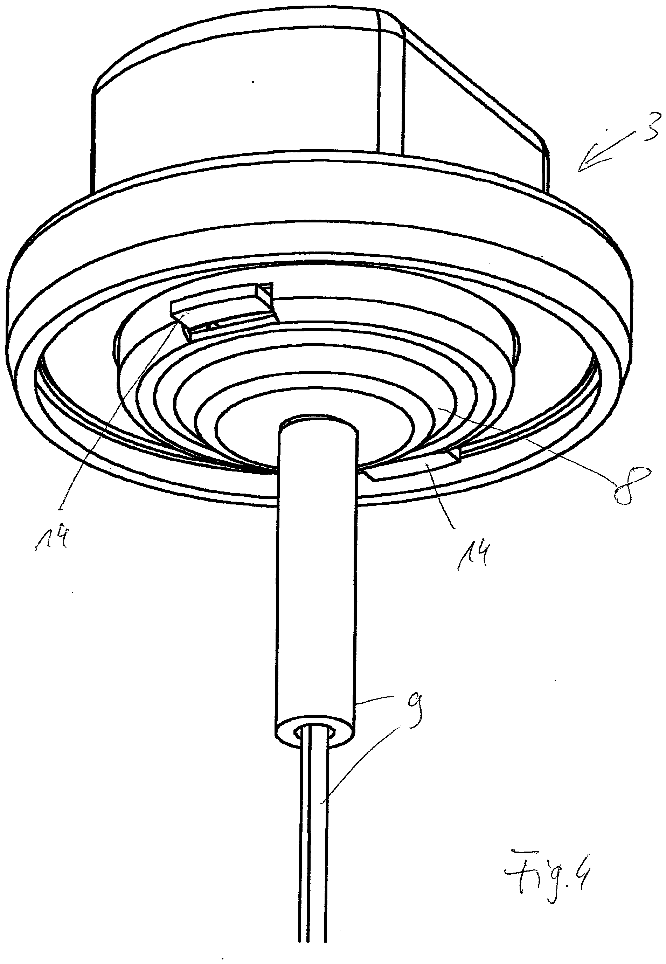

In Figur 4 wird der Deckel 3 gezeigt, an dessen unterem Ende der drehbare Peilstab 9 an dem Peilstabkorb 8 angeordnet ist. Aus dem Peilstabkorb 8 ragen zwei Peilstabkorbbajonettnasen 14 hervor.

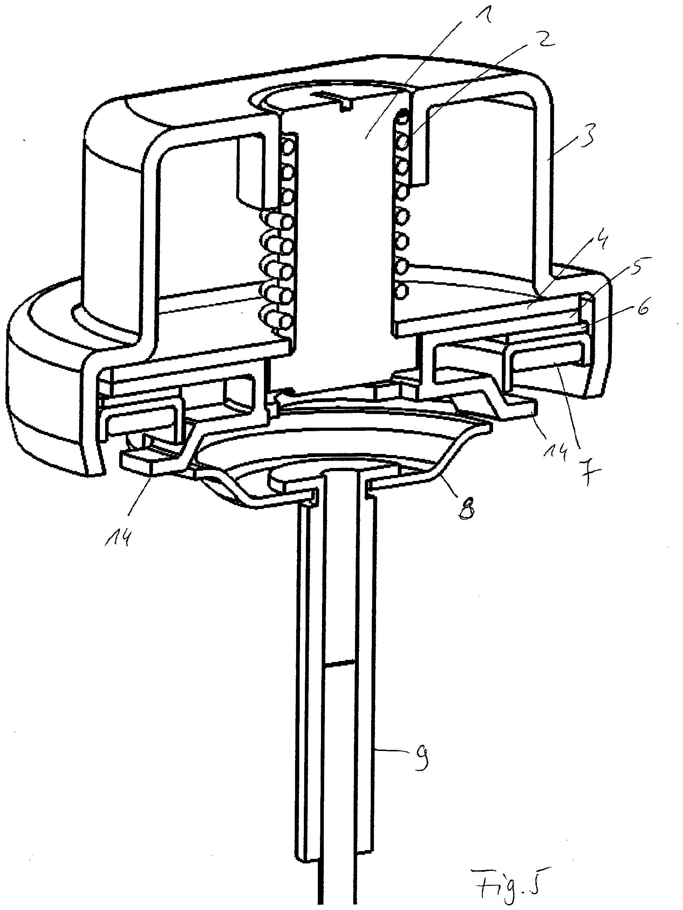

Die Figur 5 zeigt den abschließbaren Einfüllverschluss im unverschlossenen Zustand aus Figur 1 mit drehbar gelagertem und flexiblem Peilstab 9 zur Füllstandsmessung eines Fluids. Der Deckel 3 umfasst einen Schließzylinder 1, der von einer Spannfeder 2 konzentrisch umgeben ist. Stützring 4 bildet die der Deckeloberseite entgegengesetzte Lagerung des Schließzylinders 1, wobei der Stützring 4 auch als Anschlag für die Spannfeder 2 dient. An den Stützring 4 parallel und zur Deckeloberseite entgegengesetzt angebracht befindet sich das Verschlussblech 5. Planparallel zum und am Verschlussblech 5 angeordnet, befindet sich das Ausgleichselement 6. Zwischen Deckel 3 und Einfüllrohr 10 befindet sich eine kreisrunde Dichtung 7. Im Wesentlichen unterhalb des Schließzylinders, der Deckeloberseite entgegengesetzt, befindet sich ein Peilstabkorb 8, der einen drehbar gelagerten Peilstab 9 und zwei Peilstabkorbbajonettnasen 14, die in entsprechende Aussparungen am Flanschring des Einfüllrohrs 10 eingreifen, aufweist. Der Deckel 3 mit dem drehbaren und flexiblen Peilstab 9 zur Füllstandsmessung wird als abschließbarer Einfüllverschluss auf das Einfüllrohr 10 drehbar in der Weise aufgesetzt, dass zwei Peilstabkorbbajonettnasen 14, die in entsprechende Aussparungen am Flanschring des Einfüllrohrs 10 eingreifen und dieses mittels Schließzylinder 1 gegen unberechtigtes Öffnen und Zugang zum Fluidraum 11 verschließen. Mittels des Peilstabs 9 kann der Soll- bzw. Ist-Stand 12 des Fluidbehälters 13 ermittelt werden.

Der Fluidbehälter 13 ist zur Aufnahme von Kraftstoff, Öl, Ad-Blue, Wasser, Frostschutz bzw. Kühlmittel geeignet.

### Bezugszeichen

- 1: Schließzylinder
- 2: Spannfeder
- 3: Deckel
- 4: Stützring
- 5: Verschlussblech
- 6: Ausgleichselement
- 7: Dichtung
- 8: Peilstabkorb
- 9: Peilstab
- 10: Einfüllrohr
- 11: Fluidraum
- 12: Iststand
- 13: Fluidbehälter
- 14: Peilstabkorbbajonettnase

## Patentansprüche

1. Fluidbehälter (13) mit Einfüllverschluss zur Aufnahme eines Fluidvorrats, welcher aus einem Gehäuseunterteil und einem stoff- oder formschlüssig mit dem Gehäuseunterteil verbundenen Gehäuseoberteil gebildet ist, wobei das Gehäuseoberteilt mindestens ein verschließbares Einfüllrohr (10) zur Befüllung des Fluidbehälters (13) mit Fluid aufweist, wobei das verschließbare Einfüllrohr (10) wenigstens einen Deckel (3) aufweist, wobei im Deckel (3) wenigstens ein Schließzylinder angeordnet ist, wobei der Deckel (3) wenigstens einen Stützring aufweist und wobei der Deckel (3) wenigstens eine Spannfeder (2) aufweist, die im Wesentlichen konzentrisch um den Schließzylinder (1) herum angeordnet ist, **dadurch gekennzeichnet, dass** der Deckel (3) wenigstens einen Peilstabkorb (8) aufweist, wobei der Deckel (3) wenigstens einen Peilstab (9) aufweist, wobei im Peilstabkorb (8) ein drehbar gelagerter und flexibler Peilstab (9) angeordnet ist, wobei der Stützring (4) die der Deckeloberseite entgegengesetzten Lagerung des Schließzylinders (1) bildet, wobei der Stützring (4) auch als Anschlag für die Spannfeder (2) dient.

2. Fluidbehälter nach einem oder mehreren der vorgenannten Ansprüche,
**dadurch gekennzeichnet, dass** der Deckel (3) wenigstens ein Verschlussblech (5) aufweist.

3. Fluidbehälter nach einem oder mehreren der vorgenannten Ansprüche,
**dadurch gekennzeichnet, dass** der Deckel (3) wenigstens eine Dichtung (7) aufweist.

4. Fluidbehälter nach einem oder mehreren der vorgenannten Ansprüche,
**dadurch gekennzeichnet, dass** das Einfüllrohr (10) und/oder der Fluidbehälter (13) aus Kunststoff bestehen.

## Claims

1. Fluid container (13) having a filling cap for receiving a fluid supply, which consists of a lower housing part and an upper housing part connected to the lower housing part in a materially bonded or form-fitting manner, wherein the upper housing part has at least one closable filling tube (10) for filling the fluid container (13) with fluid, wherein the closable filling tube (10) has at least one cover (3), wherein at least one closing cylinder is arranged in the cover (3), wherein the cover (3) has at least one supporting ring and wherein the cover (3) has at least one tension spring (2) which is arranged substantially concentrically around the closing cylinder (1), **characterized in that** the cover (3) has at least one dipstick tray (8), wherein the cover (3) has at least one dipstick (9), wherein a rotatably mounted and flexible dipstick (9) is arranged in the dipstick tray (8), wherein the supporting ring (4) forms the mount, on the opposite side from the cover top side, of the closing cylinder (1), wherein the supporting ring (4) also serves as a stop for the tension spring (2).

2. Fluid container according to one or more of the preceding claims, **characterized in that** the cover (3) has at least one cover plate (5).

3. Fluid container according to one or more of the preceding claims, **characterized in that** the cover (3) has at least one seal (7).

4. Fluid container according to one or more of the preceding claims, **characterized in that** the filling tube (10) and/or the fluid container (13) consist of plastic.

## Revendications

1. Récipient (13) pour fluide à fermeture de remplissage, pour la reprise d'une réserve de fluide,
le récipient étant formé d'une partie inférieure de boîtier et d'une partie supérieure de boîtier reliée à la partie inférieure de boîtier en correspondance de matière ou en correspondance géométrique,
la partie supérieure de boîtier présentant au moins un tube de remplissage (10) apte à être refermé, permettant de remplir de fluide le récipient (13) pour fluide, le tube de remplissage (10) apte à être refermé présentant au moins un couvercle (3), au moins un cylindre de serrure étant disposé dans le couvercle (3),
le couvercle (3) présentant au moins un anneau de soutien et le couvercle (3) présentant au moins un ressort de serrage (2) disposé essentiellement concentriquement autour du cylindre de serrure (1), **caractérisé en ce que**
le couvercle (3) présente au moins un panier de jauge (8),
**en ce que** le couvercle (3) présente au moins une jauge (9),
**en ce qu'**une jauge (9) flexible et montée à rotation est disposée dans le panier de jauge (8),
**en ce que** l'anneau de soutien (4) forme le montage du cylindre de serrure (1) opposé au côté supérieur du couvercle et
**en ce que** l'anneau de soutien (4) sert également de butée pour le ressort de serrage (2).

2. Récipient pour fluide selon l'une ou plusieurs des revendications précédentes, **caractérisé en ce que** le couvercle (3) présente au moins une plaque de fermeture (5).

3. Récipient pour fluide selon l'une ou plusieurs des revendications précédentes, **caractérisé en ce que** le couvercle (3) présente au moins un joint d'étanchéité (7).

4. Récipient pour fluide selon l'une ou plusieurs des revendications précédentes, **caractérisé en ce que** le tube de remplissage (10) apte à être refermé et/ou le récipient (13) pour fluide sont réalisés en matière synthétique.
